# EUROPEAN PATENT SPECIFICATION

(11) **EP 4 381 788 B1**
(45) Date of publication and mention of the grant of the patent: **26.08.2026**
(21) Application number: 21961043.3
(22) Date of filing: 22.10.2021
(51) Int. Cl.: H04W 4/06, H04W 36/00, H04W 36/02, H04W 76/40, H04W 76/11, H04W 76/12

(54) **LOSSLESS MULTICAST AND BROADCAST DATA TRANSMISSIONS IN HANDOVERS**
VERLUSTLOSE MULTICAST- UND BROADCAST-DATENÜBERTRAGUNGEN BEI ÜBERGABEN
TRANSMISSIONS DE DONNÉES DE DIFFUSION ET DE MULTIDIFFUSION SANS PERTE DANS DES TRANSFERTS

(43) Date of publication of application: 12.06.2024
(73) Proprietor: ZTE Corporation, Shenzhen, Guangdong 518057 (CN)
(72) Inventor: LIU, Yansheng, Shenzhen, Guangdong 518057 (CN); MA, Zijiang, Shenzhen, Guangdong 518057 (CN); GAO, Yin, Shenzhen, Guangdong 518057 (CN)
(74) Representative: Vossius & Partner Patentanwälte Rechtsanwälte mbB
(86) International application number: PCT/CN2021/125658
(87) International publication number: WO 2023/065295

(56) References cited:
- WO-A1-2021/109474
- WO-A1-2021/207114
- CN-A- 112 511 989
- CATT ET AL: "Consideration on Flow Control Mechanism over F1-U", vol. RAN WG3, no. electronic; 20210816 - 20210826, 6 August 2021 (2021-08-06), XP052035355, Retrieved from the Internet <URL:https://ftp.3gpp.org/tsg_ran/WG3_Iu/TSGR3_113-e/Docs/R3-213544.zip R3-213544.docx> [retrieved on 20210806]
- ZTE: "Discussion on lossless mobility in NR MBS", vol. RAN WG3, no. 20210517 - 20210527, 7 May 2021 (2021-05-07), XP052001932, Retrieved from the Internet <URL:https://ftp.3gpp.org/tsg_ran/WG3_Iu/TSGR3_112-e/Docs/R3-211547.zip R3-211547 Discussion on lossless Mobility in NR MBS.doc> [retrieved on 20210507]
- SAMSUNG (MODERATOR): "Summary of Offline Discussion on CB: # 75_MBS_Mobility_Supporting", vol. RAN WG3, no. Online; 20210125 - 20210204, 5 February 2021 (2021-02-05), XP051978326, Retrieved from the Internet <URL:https://ftp.3gpp.org/tsg_ran/WG3_Iu/TSGR3_111-e/Docs/R3-211031.zip R3-211031.doc> [retrieved on 20210205]
- ERICSSON: "Mobility for NR MBS", 3GPP TSG_RAN\WG2_RL2, R2-2009960, 22 October 2020 (2020-10-22), XP051941481

## Description

### TECHNICAL FIELD

This patent document is directed generally to wireless communications.

### BACKGROUND

Mobile communication technologies are moving the world toward an increasingly connected and networked society. The rapid growth of mobile communications and advances in technology have led to greater demand for capacity and connectivity. Other aspects, such as energy consumption, device cost, spectral efficiency, and latency are also important to meeting the needs of various communication scenarios. Various techniques, including new ways to provide higher quality of service, longer battery life, and improved performance are being discussed.

3GPP, R3-213544 relates to consideration on flow control mechanism over F1-U.

3GPP, R3-211547 relates to discussion on lossless mobility in NR MBS.

CN 112511989 A relates to a switching processing method, communication equipment and a computer readable storage medium.

### SUMMARY

This patent document describes, among other things, techniques that enable lossless Multicast and Broadcast Service (MBS) data transmissions in various handover scenarios.

The invention is specified by the independent claims. Preferred embodiments are defined in the dependent claims. In the following description, although numerous features may be designated as optional, it is nevertheless acknowledged that all features comprised in the independent claims are not to be read as optional.

In one example aspect, a method for wireless communications includes receiving, by a first network node, a request message from a second network node comprising information for establishing an MBS session. The method includes establishing a buffer associated with the MBS session by the first network node based on a requirement of the buffer, and transmitting, by the first network node, a response message to the second network node in response to the request message. The response message comprises information about the established buffer.

In another example aspect, a method for wireless communications includes transmitting, from a first access node, a first message to a second access node indicating information associated with an MBS session. The first access node is configured to store a first set of MBS data packets received from a core network in a first buffer, and the second access node is configured to store a second set of MBS data packets received from the core network in a second buffer. The first message includes information of a last MBS data packet received and stored by the first access node. The method includes receiving, by the first access node, a second message from the second access node. The second message includes information of a last MBS data packet received and stored by the second access node. The method also includes forwarding, by the first access node, at least part of the first set of MBS data packets stored in the first buffer to the second access node.

In another example aspect, a communication apparatus is disclosed. The apparatus includes a processor that is configured to implement an above-described method.

These, and other, aspects are described in the present document.

### BRIEF DESCRIPTION OF DRAWINGS

FIG. 1 illustrates an example data flow for MBS data transmissions.
FIG. 2 is a flowchart representation of a method for wireless communications in accordance with one or more embodiments of the present technology.
FIG. 3 is an example sequence chart of signaling messages between a Radio Access Node (RAN) and the core network (CN) in accordance with one or more embodiments of the present technology.
FIG. 4A illustrates an example Fifth Generation (5G) network deployment for MBS.
FIG. 4B illustrates another example 5G network deployment for MBS.
FIG. 5 is an example sequence chart of signaling messages between Central Unit (CU)-User Plane (UP) and CU-Control Plane (CP) in accordance with one or more embodiments of the present technology.
FIG. 6 is a flowchart representation of another method for wireless communications in accordance with one or more embodiments of the present technology.
FIG. 7 is a flowchart representation of yet another method for wireless communications in accordance with one or more embodiments of the present technology.
FIG. 8 illustrates an example scenario of a Source RAN (S-RAN) and a Target RAN (T-RAN) in accordance with one or more embodiments of the present technology.
FIG. 9 an example sequence chart of signaling messages between the S-RAN, the T-RAN, and the CN in accordance with one or more embodiments of the present technology.
FIG. 10 illustrates another example scenario of a S-RAN and a T-RAN in accordance with one or more embodiments of the present technology.
FIG. 11 an example sequence chart of signaling messages between the S-RAN and the T-RAN in accordance with one or more embodiments of the present technology.
FIG. 12 shows an example of a wireless communication system where techniques in accordance with one or more embodiments of the present technology can be applied.
FIG. 13 is a block diagram representation of a portion of a radio station in accordance with one or more embodiments of the present technology can be applied.

### DETAILED DESCRIPTION

Section headings are used in the present document only to improve readability and do not limit scope of the disclosed embodiments and techniques in each section to only that section. Certain features are described using the example of Fifth Generation (5G) wireless protocol. However, applicability of the disclosed techniques is not limited to only 5G wireless systems.

Multicast/Broadcast Service (MBS) is a concept that network resources are used to send the same multimedia content to everyone (e.g., broadcasting) or to a group of subscribers (e.g., multicasting) rather than sending content to individual subscribers. With the development of the 5G New Radio (NR) technology, MBS has become one of the key aspects for Internet of Things (IoT) and Vehicle to Everything (V2X) communications.

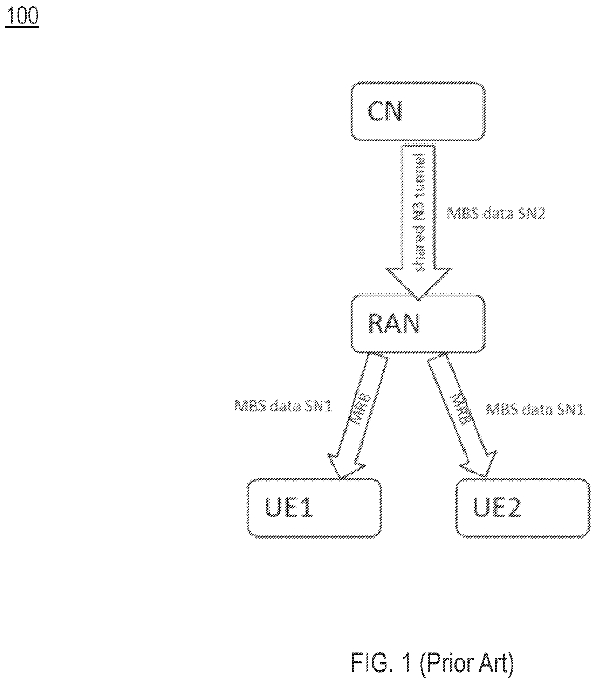

To improve transmission efficiency of the MBS data, it has been proposed to transport the MBS data packets from the Core Network (CN) to the access node (New-Generation Radio Access Node, NG-RAN) using a shared N3 tunnel instead of a unicast channel. The shared N3 tunnel is a tunnel that is defined for MBS use only. FIG. 1 illustrates an example data flow for MBS data transmissions. The CN transmits MBS data packets to the NG-RAN using the shared N3 tunnel. The NG-RAN then forwards the MBS data packets to the UEs (e.g., UE1, UE2) via the Multicast Radio Bearer (MRBs). Currently, the NG-RAN does not buffer or store the received MBS data packets temporarily -- all the MBS data packets are forwarded directly to the UEs. However, when a UE is handed over from one NG-RAN to another, data packets may be lost during the handover process as the source NG-RAN and the target NG-RAN may not transmit the MBS packets in the correct order due to latency in the network.

This patent document discloses techniques that can be implemented in various embodiments to ensure lossless MBS data transfers in various handover scenarios. In particular, a buffer can be constructed or established for each MBS session at the access node to temporarily store each received MBS data packet so as to maintain the MBS data continuity and ensure lossless MBS data during UE handovers from the source node to other nodes.

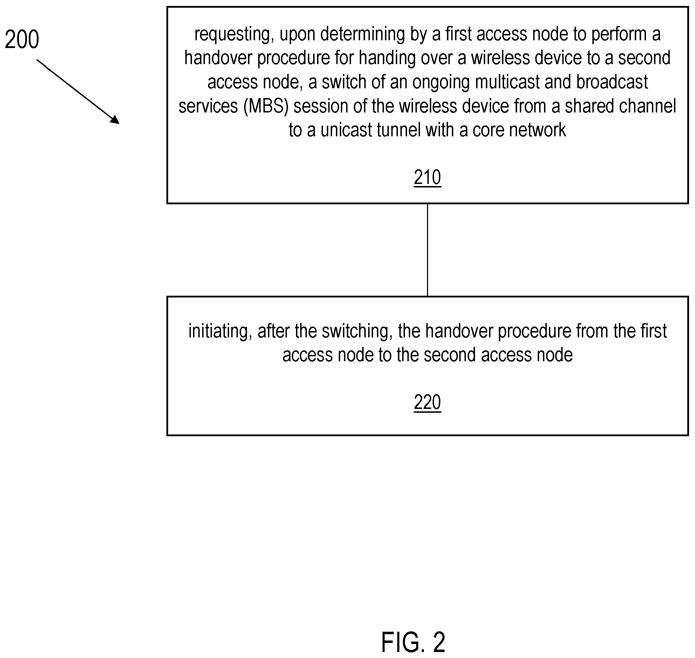

FIG. 2 is a flowchart representation of a method 200 for wireless communications in accordance with one or more embodiments of the present technology. A first set of preferred solutions may include the following (e.g., as described with reference to Embodiments 1 to 3).

The method 200 includes, at operation 210, receiving, by a first network node, a request message from a second network node comprising information for establishing a multicast and broadcast service (MBS) session. In some embodiments, the first network node is an access node, and the second network node is a node in a core network. In some embodiments, the first network node comprises a centralized unit (CU) user plane (CP) function, and the second network node comprises a CU control plane (UP) function. The method 200 includes, at operation 220, establishing a buffer associated with the MBS session by the first network node based on a requirement of the buffer. For example, the buffer can be established accordingly to the information included in the request message. Alternatively, or in addition, the buffer can be established using the information as a reference or guidance. The method 200 also includes, at operation 230, transmitting, by the first network node, a response message to the second network node in response to the request message, wherein the response message comprises information about the established buffer.

In some embodiments, the request message includes the requirement of the buffer associated with the MBS session. In some embodiments, the request message comprises at least an identifier of the MBS session or a priority of the MBS session. In some embodiments, the requirement for the buffer indicates one or more of: (1) a size limitation of the buffer, (2) a number of MBS data packets storable in the buffer, and/or (3) a periodicity associated with storing MBS data packets.

In some embodiments, the information about the established buffer includes acknowledgement indicating establishment of the buffer. In some embodiments, the information about the established buffer includes one or more parameters of the established buffer.

Some examples of the disclosed techniques are further described in the following example embodiments.

### Embodiment 1

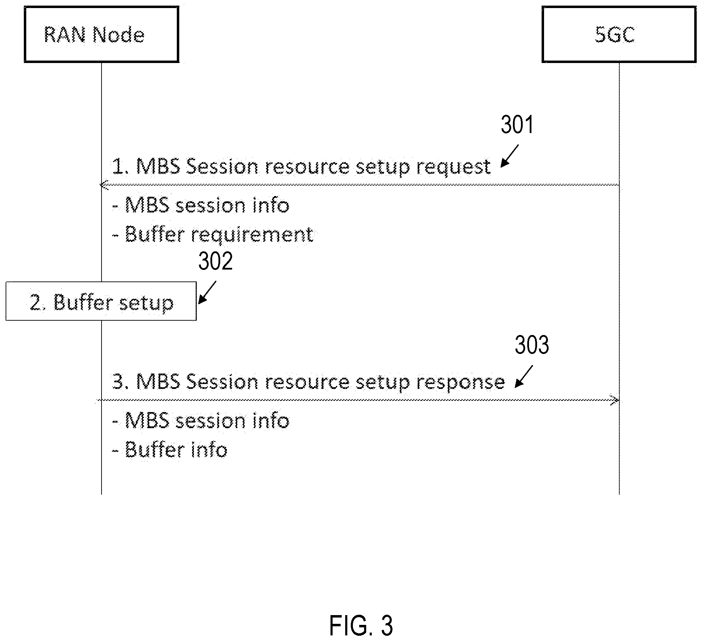

In some embodiments, the CN can configure the MBS buffer that is to be established by the RAN. FIG. 3 is an example sequence chart of signaling messages between a RAN node and the core network (e.g., 5G Core, 5GC) in accordance with one or more embodiments of the present technology.

Operation 301: During the MBS session establishment procedure, 5GC transmits a message (e.g., MBS Session Resource Setup Request message) to the RAN node. The message can include one or more of the following parameters for the buffer: MBS session information (such as MBS session identifier (ID) and/or MBS priority) and/or buffer requirements (such as a size limitation of the buffer, a number of MBS data packets that can be stored in the buffer, and/or a periodicity associated with storing MBS data packets).

Operation 302: The RAN node uses the received buffer parameters and establish a buffer for the MBS session based on the received parameters. In some embodiments, the RAN node constructs a buffer according to the received parameters so as to completely fulfills the requirements provided by the CN. In some embodiments, the RAN node constructs the buffer using the received parameters as a reference and makes its own determination regarding the parameters of the buffer to be established.

Operation 303: The RAN node transmits a response message (e.g., MBS Session resource setup response message) to the 5GC. The response message can include the MBS session information (e.g., MBS session ID) as well as the actual parameters for the established buffer. The response message can also include an indicator indicating that the buffer setup has completed successfully.

### Embodiment 2

As shown in FIG. 3, during the MBS session establishment, the RAN node can establish a buffer for the corresponding MBS session. The parameters of the buffer can be configured by the CN (e.g., 5GC) or other network nodes such as the Operation, Administration and Maintenance (OAM). The parameters of the buffer can be partially or fully determined by the RAN node based on its implementation and/or configurations from the CN or other nodes.

In some embodiments, different MBS sessions can be allocated different resources for its buffer. For example, for a first MBS session with a higher priority, the RAN node can allocate more resources for the first MBS session. For a second MBS session with a lower priority, the RAN node can allocate fewer resources for the second MBS session. Alternatively, or in addition, different NG-RAN nodes can allocate different buffer resources for the same MBS session.

The buffer parameters specify some limitations of the MBS buffer at the RAN side. For example, the parameters can specify the number of data packets that can be held by the buffer and/or a limitation on the volume of the buffer. The parameters can further specify a period in which the MBS data packets are buffered (e.g., the access node needs to buffer the data packets for how long).

### Embodiment 3

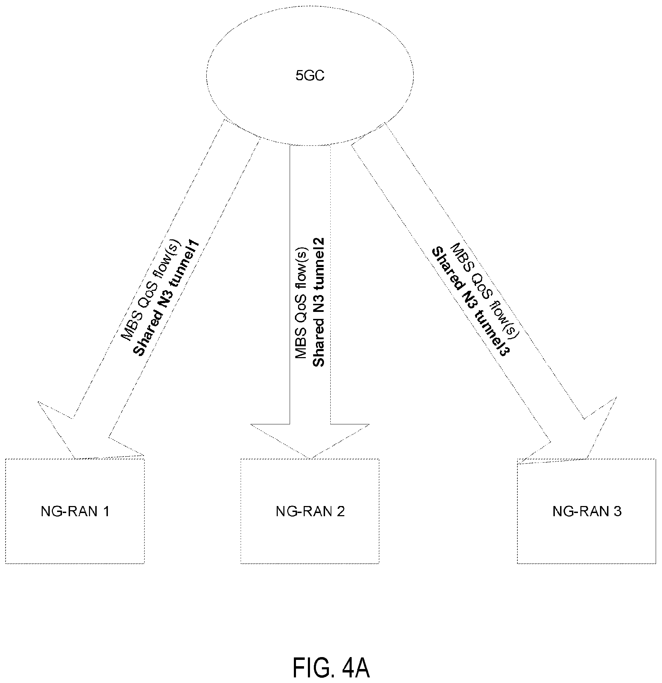

The 5G network has introduced different types of deployments for MBS. FIG. 4A illustrates an example 5G network deployment for MBS. As shown in FIG. 4A, the 5GC (e.g., the UPF) establishes an N3 tunnel with each NG-RAN node. A UE can camp on a cell that belongs to an NG-RAN1 when the network allows the UE to join an MBS service. If the MBS service has been established for the NG-RAN1 node, the NG-RAN1 node already has a multicast/shared N3 tunnel used for transmitting user data for the MBS service. There is no need for the 5GC to establish the N3 tunnel again the UE. However, if the multicast/shared N3 tunnel has not been established for the NG-RAN1 node, the 5GC establishes the tunnel so that user data of the MBS service can be transmitted to the UE from a network node (e.g., the UPF). In this deployment, the 5GC needs to establish separate N3 tunnels for each NG-RAN node providing the MBS service.

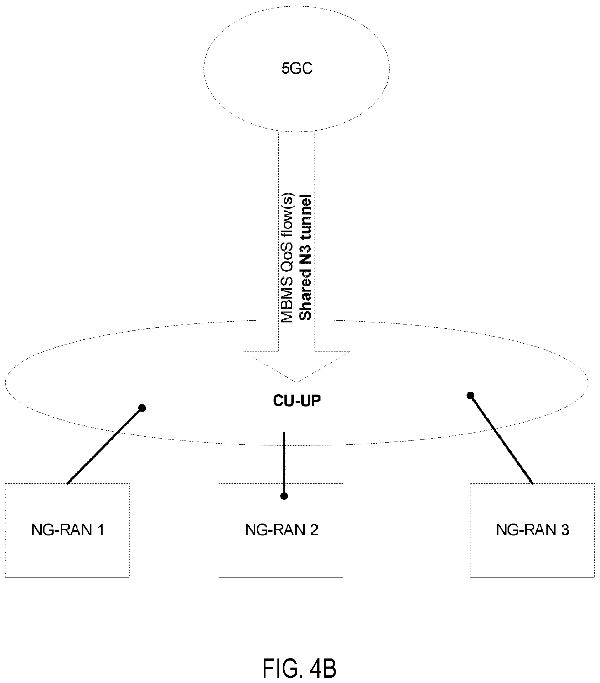

FIG. 4B illustrates another example 5G network deployment for MBS. Here, the NG-RAN node is split into two parts: a Central Unit (CU) and a Distributed Unit (DU). The CU can be further divided into two parts: Control Plane (CP) CU and User Plane (UP) CU. CU/DU split and CP/UP separation are adopted in this deployment such that NG-RAN nodes share the user plane resources. Only one N3 tunnel is needed between the 5GC (e.g., the UPF) and the NG-RAN nodes. If the multicast/shared N3 tunnel has been established for one NG-RAN node (e.g., NG-RAN 1), there is no need to re-establish additional N3 tunnel for other NR-RAN nodes.

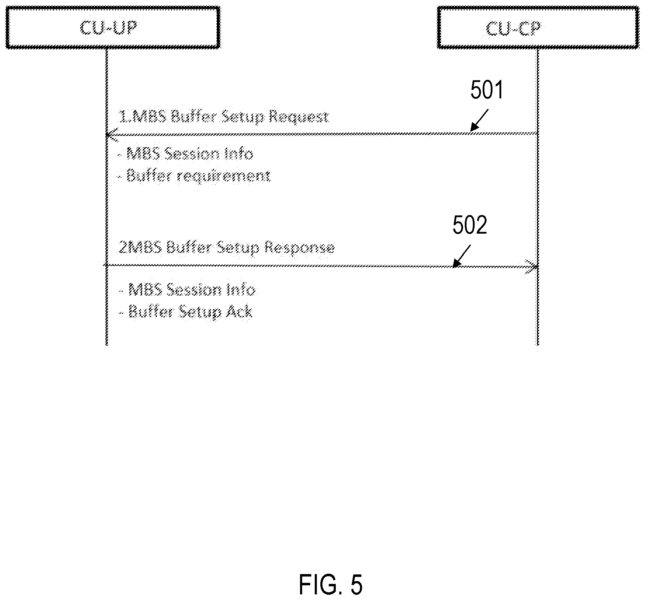

In the CU/DU split and CP/UP separation deployment scenario, the NG-RAN node can setup the buffer at the CU-UP side. In some embodiments, one MBS buffer is established for one MBS session in one shared CU-UP. FIG. 5 is an example sequence chart of signaling messages between CU-UP and CU-CP in accordance with one or more embodiments of the present technology.

Operation 501: The CU-CP transmits a E1 message (e.g., MBS buffer setup request message) to the CU-UP. The message can include one or more of the following parameters for the buffer: MBS session information (such as MBS session identifier (ID) and/or MBS priority) and/or buffer requirements (such as a size limitation of the buffer, a number of MBS data packets that can be stored in the buffer, and/or a periodicity associated with storing MBS data packets).

Operation 502, After the CU-UP receives the message, it establishes an MBS buffer according to the parameters in the message to completely fulfill the requirements for the MBS session. The CU-UP then transmits a E1 response message (e.g., MBS buffer setup response message) to the CU-CP. The response message can include the MBS session information (e.g., MBS session ID) as well as the actual parameters for the established buffer. The response message can also include an indicator indicating that the buffer setup has completed successfully.

When a handover occurs between nodes that support MBS, the UE can continue to receive the MBS data packets in a proper order via the target NG-RAN nodes even if when source and target nodes may be transmitting different MBS data. To facilitate the ordering and re-ordering of the data packets, a unique serial number can be used for each MBS data packet. The serial number can be existing number (e.g., Packet Data Convergence Protocol, PDCP, packet number) or other newly or previously defined serial number. For each MBS session, the MBS packet with the same serial number includes the same MBS data.

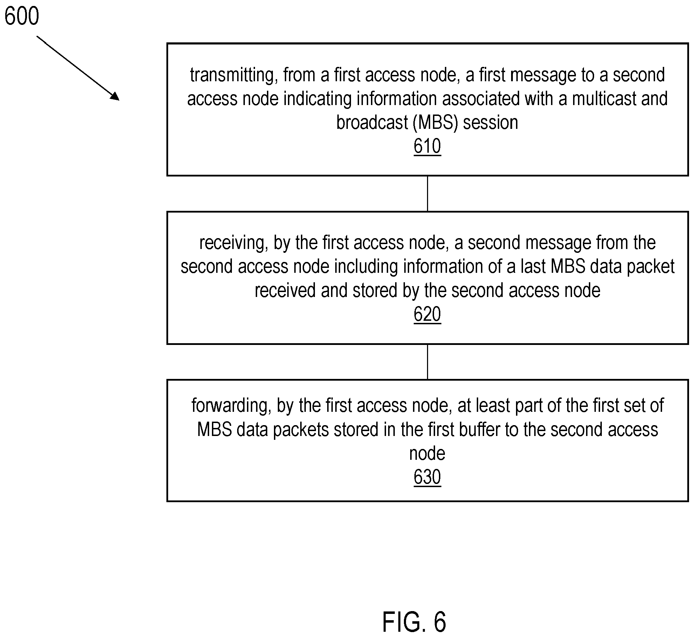

FIG. 6 is a flowchart representation of a method 600 for wireless communications in accordance with one or more embodiments of the present technology. A second set of preferred solutions may include the following (e.g., as described with reference to Embodiments 4 to 5).

The method 600 includes, at operation 610, transmitting, from a first access node (e.g., a source node in a handover), a first message to a second access node (e.g., a target node in the handover) indicating information associated with a multicast and broadcast (MBS) session. The first access node is configured to store a first set of MBS data packets received from a core network in a first buffer, and the second access node is configured to store a second set of MBS data packets received from the core network in a second buffer. The first message includes information of a last MBS data packet received and stored by the first access node. The method 600 includes, at operation 620, receiving, by the first access node, a second message from the second access node. The second message includes information of a last MBS data packet received and stored by the second access node. The method 600 includes, at operation 630, forwarding, by the first access node, at least part of the first set of MBS data packets stored in the first buffer to the second access node.

In some embodiments, each of the first set and the second set of MBS data packets is associated with a unique sequence number. The method further comprises re-ordering, by the first access node, the first set of MBS data packets according to the respective unique sequence number, and transmitting, by the first access node, the at least part of the first set of MBS data packets based on the reordered MBS data packets. In some embodiments, the first message further comprises at least an identifier of the MBS session, information about a shared tunnel via which the first access node receives the first set of MBS data packets, Quality of Service information associated with the MBS session. In some embodiments, the second message further comprises at least an identifier of the MBS session, information about a shared tunnel via which the first access node receives the first set of MBS data packets, Quality of Service information associated with the MBS session.

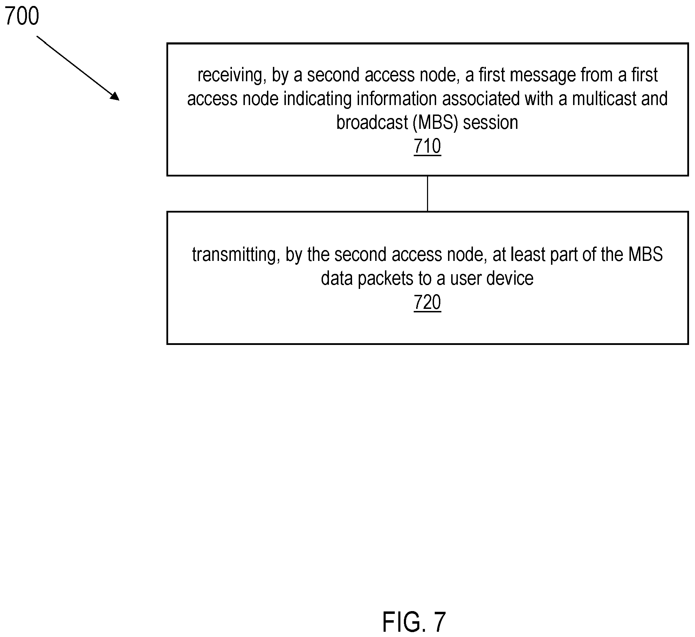

FIG. 7 is a flowchart representation of a method 700 for wireless communications in accordance with one or more embodiments of the present technology. A third set of preferred solutions may include the following (e.g., as described with reference to Embodiments 4 to 5).

The method 700 includes, at operation 710, receiving, by a second access node (e.g., a target node in a handover), a first message from a first access node (e.g., a source node in the handover) indicating information associated with a multicast and broadcast (MBS) session. The first access node stores a first set of MBS data packets received from a core network in a first buffer, and the second access node stores a second set of MBS data packets received from the core network in a second buffer. Each of the first set and the second set of MBS data packets is associated with a unique sequence number, and the first message includes information of a last MBS data packet received and stored by the first access node. The method 700 also includes, at operation 720, transmitting, by the second access node, at least part of the first set and/or the second of MBS data packets to a user device.

In some embodiments, the method includes transmitting, by the second access node, a second message to the first access node. The second message includes information of a last MBS data packet received and stored by the second access node. In some embodiments, the method includes receiving, by the second access node, at least part of the first set of MBS data packets from the first access node prior to transmitting the MBS data packets to the user device.

In some embodiments, the method includes reordering, by the second access node, the second set of MBS data packets and the received MBS data packets according to the respective unique sequence number. In some embodiments, the method includes transmitting, by the second access node, a request message to the core network after recording the MBS data packets. The request message includes information of a last MBS data packet of the reordered MBS data packets in the second buffer. The method also includes receiving, by the second access node, a response message from the core network acknowledging subsequent transmissions of MBS data packets with sequence numbers greater than the sequence number of the last MBS data packet.

Some examples of the disclosed techniques are further described in the following example embodiments.

### Embodiment 4

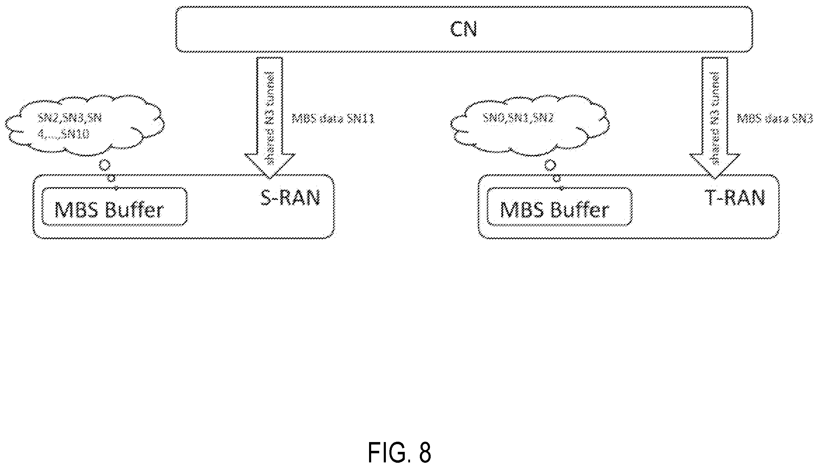

FIG. 8 illustrates an example scenario of a Source NG-RAN (S-RAN) and a Target NG-RAN (T-RAN) in accordance with one or more embodiments of the present technology. In this example, both the S-RAN and the T-RAN support MBS. The MBS data transmissions to the S-RAN (e.g., SN2, SN3, ..., SN10) is faster than the MBS data transmissions to the T-RAN (e.g., SN0, SN1, SN2). That is, the S-RAN has buffered more data than the T-RAN (e.g., SN3, SN4, ..., SN10). If the UE is handed over from S-RAN to T-RAN, the additional data packets buffered by the S-RAN (e.g., SN3, SN4, ..., SN10) need to be forwarded to the T-RAN to avoid any data loss.

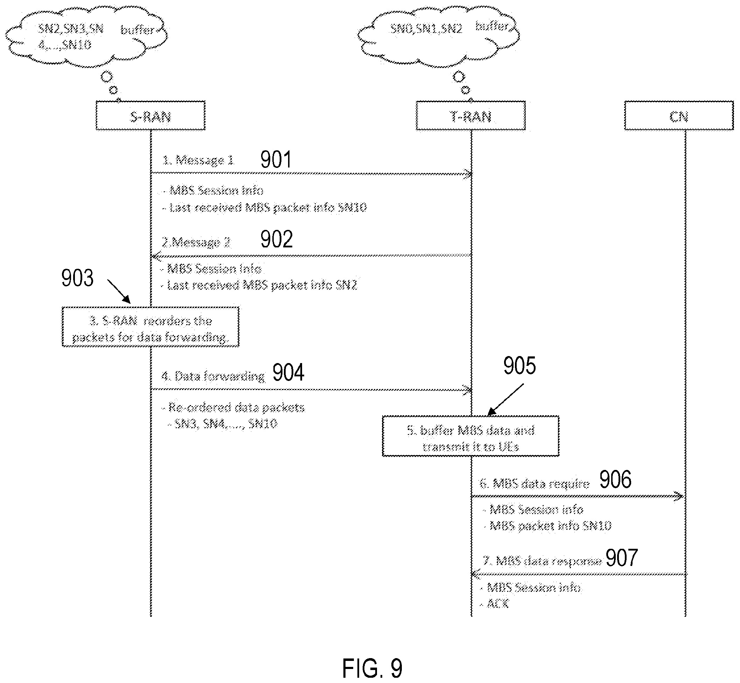

FIG. 9 an example sequence chart of signaling messages between the S-RAN, the T-RAN, and the CN in accordance with one or more embodiments of the present technology. In this example, both the S-RAN and the T-RAN support MBS. The S-RAN stores MBS data packet #SN2, SN3,SN4, ... SN10 in its buffer. The T-RAN stores MBS data packet #SN0, SN1, SN2 in its buffer. A UE that camps in the S-RAN and receives MBS data is going to be handed over to the T-RAN.

Operation 901: The S-RAN transmits a request message (e.g., Xn message Handover Request, or NG message Handover Required and/or Handover Request, etc.) to the T-RAN. The request message includes one or more of the following: MBS session information (such as MBS session ID, MBS area scope information, N3 tunnel information such as tunnel ID, tunnel address, tunnel endpoint identifiers, associated QoS information, etc.) and/or information about the last received MBS packet in the buffer (e.g., information about packet SN10).

Operation 902: The T-RAN receives the request message and determines that it has never received SN10. Hence, the T-RAN transmits a response message (e.g., Xn message Handover Request Acknowledgement or NG message Handover Request Acknowledgement and/or Handover Command, etc.) to the S-RAN. The response message includes one or more of the following: MBS session information (such as MBS session ID, MBS area scope information, N3 tunnel information such as tunnel ID, tunnel address, tunnel endpoint identifiers, associated QoS information, etc.) and/or information about the last received MBS packet in the buffer (e.g., information about packet SN2).

Operation 903: The S-RAN examines the information about the received MBS packet SN (e.g., SN2) and reorders the buffered MBS data packets that are going to be transmitted to T-RAN (e.g., from SN3 to SN10). As the T-RAN has received SN1 and SN2, only packets SN3 to SN10 need to be forwarded to the T-RAN.

Operation 904: The S-RAN forwards the re-ordered MBS data to T-RAN.

Operation 905: After the T-RAN receives the forwarded MBS data, it stores the received data into the buffer. The T-RAN can transmit all data to its camped UEs that are using this MBS session. Depending on the parameters of the T-RAN's buffer, in some embodiments, not all of the forwarded MBS data can be stored in the buffer. The T-RAN can start to transmit part of the stored packets to the UEs, or adopt other means (e.g., an additional temporary buffer) to ensure that all data packets can be forwarded to the UEs for data lossless handovers.

Operation 906: After the T-RAN receives the reordered MBS data packets from S-RAN, T-RAN transmits a message (e.g., MBS data require message) to the CN. The message includes one or more of the following: MBS session information (such as MBS session ID, MBS area scope information, N3 tunnel information such as tunnel ID, tunnel address, tunnel endpoint identifiers, associated QoS information, etc.) and/or information about the last received MBS packet in the buffer (e.g., information about packet SN10).

Operation 907: After the CN receives the MBS data require message, the CN learns that T-RAN has already received the MBS data packets with the SN before SN10. CN transmits a response message (e.g., MBS data response message) to the T-RAN. The response message includes one or more of the following: MBS session information (such as MBS session ID, MBS area scope information, N3 tunnel information such as tunnel ID, tunnel address, tunnel endpoint identifiers, associated QoS information, etc.) and/or acknowledgement (e.g., a one-bit indication) indicating that subsequent transmissions will be based on the information provided by the T-RAN. The CN can then skip transmissions of the MBS data packets between SN3 and SN10. The next MBS data packet transmits from the CN to the T-RAN will be SN11.

### Embodiment 5

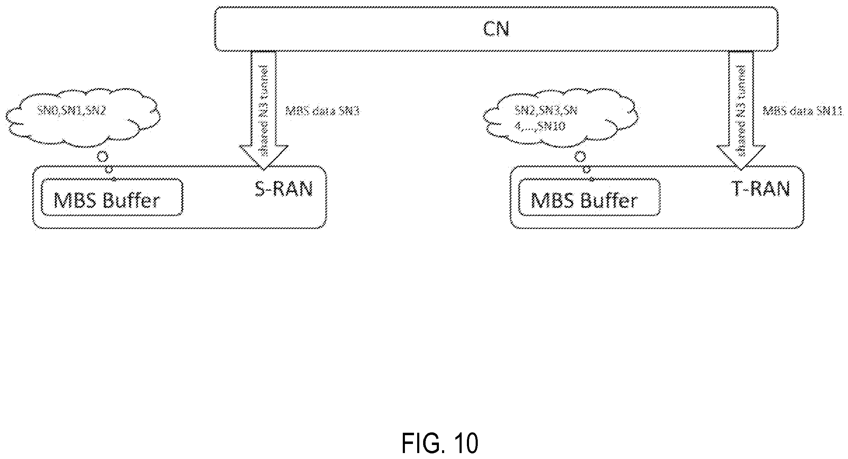

FIG. 10 illustrates another example scenario of a S-RAN and a T-RAN in accordance with one or more embodiments of the present technology. In this example, both the S-RAN and the T-RAN support MBS. The MBS data transmissions to the S-RAN (e.g., SN0, SN1, SN2) is slower than the MBS data transmissions to the T-RAN (e.g., SN2, SN3, SN4, ..., SN10). That is, the T-RAN has buffered more data than the S-RAN (e.g., SN3, SN4, ..., SN10). If the UE is handed over from S-RAN to T-RAN, the additional data packets buffered by the T-RAN (e.g., SN3, SN4, ..., SN10) need to be accounted for to avoid any data loss.

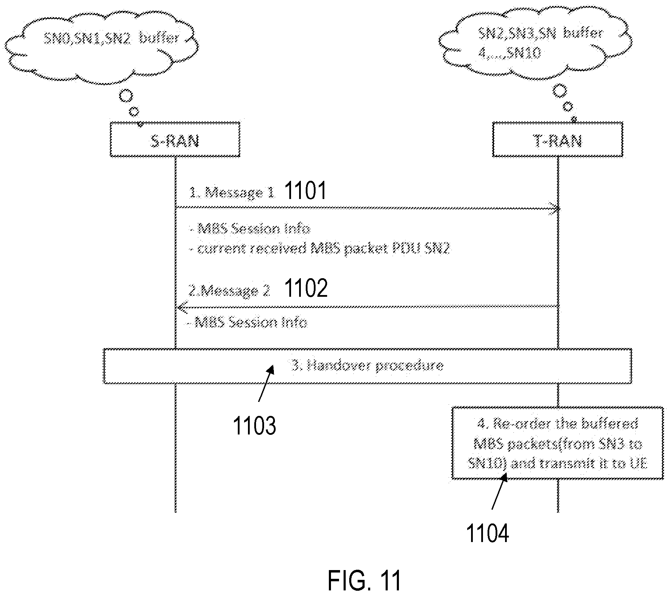

FIG. 11 an example sequence chart of signaling messages between the S-RAN and the T-RAN in accordance with one or more embodiments of the present technology. In this example, both the S-RAN and the T-RAN support MBS. The S-RAN stores MBS data packet #SN0, SN1,SN2 in its buffer. The T-RAN stores MBS data packet #SN2, SN3, SN4, ..., SN10 in its buffer. A UE that camps in the S-RAN and receives MBS data is going to be handed over to the T-RAN.

Operation 1101: The S-RAN transmits a request message (e.g., Xn message Handover Request, or NG message Handover Required and/or Handover Request, etc.) to the T-RAN. The request message includes one or more of the following: MBS session information (such as MBS session ID, MBS area scope information, N3 tunnel information such as tunnel ID, tunnel address, tunnel endpoint identifiers, associated QoS information, etc.) and/or information about the last received MBS packet in the buffer (e.g., information about packet SN2).

Operation 1102: The T-RAN receives the request message and determines that it has never received SN10. Hence, the T-RAN transmits a response message (e.g., Xn message Handover Request Acknowledgement or NG message Handover Request Acknowledgement and/or Handover Command, etc.) to the S-RAN. The response message includes one or more of the following: MBS session information (such as MBS session ID, MBS area scope information, N3 tunnel information such as tunnel ID, tunnel address, tunnel endpoint identifiers, associated QoS information, etc.).

Operation 1103: The S-RAN receives the response and determines that the response does not include any information regarding the MBS packet(s) of the T-RAN. The S-RAN then knows that no MBS packet needs to be forwarded to T-RAN. The S-RAN the performs handover procedure.

Operation 1104: After the UE camps on the T-RAN, the T-RAN re-orders the buffered MBS data packets (from SN3 to SN10) and transmits the packets to the UE. As the S-RAN has received SN1 and SN2 and forwarded to the UEs, only packets SN3 to SN10 need to be forwarded to the UEs at this point.

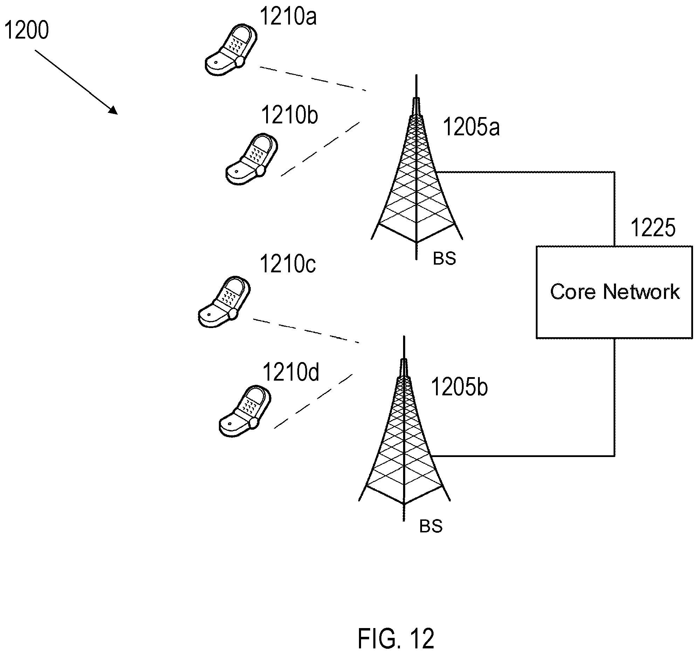

FIG. 12 shows an example of a wireless communication system 1200 where techniques in accordance with one or more embodiments of the present technology can be applied. A wireless communication system 1200 can include one or more base stations (BSs) 1205a, 1205b, one or more wireless devices 1210a, 1210b, 1210c, 1210d, and a core network 1225. A base station 1205a, 1205b can provide wireless service to wireless devices 1210a, 1210b, 1210c and 1210d in one or more wireless sectors. In some implementations, a base station 1205a, 1205b includes directional antennas to produce two or more directional beams to provide wireless coverage in different sectors. The core network 1225 can communicate with one or more base stations 1205a, 1205b. The core network 1225 provides connectivity with other wireless communication systems and wired communication systems. The core network may include one or more service subscription databases to store information related to the subscribed wireless devices 1210a, 1210b, 1210c, and 1210d. A first base station 1205a can provide wireless service based on a first radio access technology, whereas a second base station 1205b can provide wireless service based on a second radio access technology. The base stations 1205a and 1205b may be co-located or may be separately installed in the field according to the deployment scenario. The wireless devices 1210a, 1210b, 1210c, and 1210d can support multiple different radio access technologies. The techniques and embodiments described in the present document may be implemented by the base stations of wireless devices described in the present document.

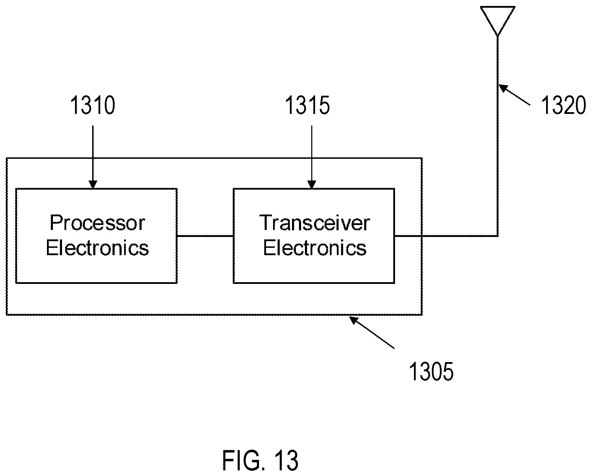

FIG. 13 is a block diagram representation of a portion of a radio station in accordance with one or more embodiments of the present technology can be applied. A radio station 1305 such as a network node, a base station, or a wireless device (or UE) can include processor electronics 1310 such as a microprocessor that implements one or more of the wireless techniques presented in this document. The radio station 1305 can include transceiver electronics 1315 to send and/or receive wireless signals over one or more communication interfaces such as antenna 1320. The radio station 1305 can include other communication interfaces for transmitting and receiving data. Radio station 1305 can include one or more memories (not explicitly shown) configured to store information such as data and/or instructions. In some implementations, the processor electronics 1310 can include at least a portion of the transceiver electronics 1315. In some embodiments, at least some of the disclosed techniques, modules or functions are implemented using the radio station 1305. In some embodiments, the radio station 1305 may be configured to perform the methods described herein.

It will be appreciated that the present document discloses techniques that can be embodied in various embodiments to ensure lossless MBS data transmissions in different handover scenarios. The disclosed techniques can be used in different handover scenarios, depending on the information associated with the T-RAN that is known to the S-RAN. The disclosed and other embodiments, modules and the functional operations described in this document can be implemented in digital electronic circuitry, or in computer software, firmware, or hardware, including the structures disclosed in this document and their structural equivalents, or in combinations of one or more of them. The disclosed and other embodiments can be implemented as one or more computer program products, i.e., one or more modules of computer program instructions encoded on a computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them. A propagated signal is an artificially generated signal, e.g., a machine-generated electrical, optical, or electromagnetic signal, that is generated to encode information for transmission to suitable receiver apparatus.

A computer program (also known as a program, software, software application, script, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this document can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit). Processors suitable for the execution of a computer program include, by way of example, both general and special purpose microprocessors, and any one or more processors of any kind of digital computer. Generally, a processor will receive instructions and data from a read only memory or a random-access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

While this patent document contains many specifics, these should not be construed as limitations on the scope of any invention or of what may be claimed, but rather as descriptions of features that may be specific to particular embodiments of particular inventions. Certain features that are described in this patent document in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. Moreover, the separation of various system components in the embodiments described in this patent document should not be understood as requiring such separation in all embodiments.

Only a few implementations and examples are described, and other implementations, enhancements and variations can be made based on what is described and illustrated in this patent document.

## Claims

1. A method for wireless communications, comprising:
receiving, by a first access node, a request message from a core network node comprising information for establishing a multicast and broadcast service, MBS, session, wherein the first access node is a source access node or a target access node in a handover process for a wireless device from the source access node to the target access node,
establishing a buffer associated with the MBS session based on a requirement of the buffer, and
transmitting a response message to the core network node in response to the request message, wherein the response message comprises information about an established buffer, and wherein the established buffer maintains continuity in a reception of MBS data of the MBS session by the wireless device during the handover process.

2. The method of claim 1, wherein the request message includes the requirement of the buffer associated with the MBS session.

3. The method of claim 1 or 2, wherein the request message comprises at least an identifier of the MBS session or a priority of the MBS session.

4. The method of any of claims 1 to 3, wherein the requirement for the buffer indicates at least one of: (1) a size limitation of the buffer, (2) a number of MBS data packets storable in the buffer, (3) a periodicity associated with storing MBS data packets.

5. The method of any of claims 1 to 4, wherein the information about the established buffer includes (1) an acknowledgement indicating an establishment of the buffer or (2) one or more parameters of the established buffer.

6. The method of any of claims 1 to 5, wherein the first access node comprises a centralized unit, CU, user plane, UP, function, and wherein the core network node comprises a CU control plane, CP, function.

7. The method of claim 1, wherein the source access node is configured to:
transmit a first message to the target access node indicating information associated with the MBS session, wherein the source access node is configured to store a first set of MBS data packets received from the core network node in a first buffer, wherein the target access node is configured to store a second set of MBS data packets received from the core network node in a second buffer, and wherein the first message includes information of a last MBS data packet received and stored by the source access node,
receive a second message from the target access node, wherein the second message includes information of a last MBS data packet received and stored by the target access node, and
forward at least part of the first set of MBS data packets stored in the first buffer to the target access node.

8. The method of claim 7, wherein each of the first set of MBS data packets and the second set of MBS data packets is associated with a unique sequence number, and wherein the source access node is further configured to:
re-order the first set of MBS data packets according to a respective unique sequence number, and
transmit the at least part of the first set of MBS data packets based on reordered MBS data packets.

9. The method of claim 7 or 8, wherein the first message or the second message further comprises at least an identifier of the MBS session, information about a shared tunnel via which the source access node receives the first set of MBS data packets, Quality of Service information associated with the MBS session.

10. The method of claim 1, wherein the target access node is configured to:
receive a first message from the source access node indicating information associated with the MBS, session, wherein the source access node stores a first set of MBS data packets received from the core network node in a first buffer, wherein the target access node stores a second set of MBS data packets received from the core network node in a second buffer, wherein each of the first set of MBS data packets and the second set of MBS data packets is associated with a unique sequence number, and wherein the first message includes information of a last MBS data packet received and stored by the source access node, and
transmit at least part of the first set of MBS data packets or the second set of MBS data packets to a user device.

11. The method of claim 10, wherein the target access node is further configured to :
transmit a second message to the source access node, wherein the second message includes information of a last MBS data packet received and stored by the target access node.

12. The method of claim 10 or 11, wherein the target access node is further configured to:
receive at least part of the first set of MBS data packets from the first access node prior to transmitting MBS data packets to the user device.

13. The method of any of claims 10 to 12, wherein the target access node is further configured to:
re-order the second set of MBS data packets and received MBS data packets according to a respective unique sequence number.

14. The method of claim 13, wherein the target access node is further configured to:
transmit a second request message to the core network node after recording the received MBS data packets, wherein the second request message includes information of a last MBS data packet of reordered MBS data packets in the second buffer, and
receive a second response message from the core network node acknowledging subsequent transmissions of MBS data packets with sequence numbers greater than a sequence number of the last MBS data packet.

15. A communication apparatus (1305), comprising a processor (1310) configured to implement the method recited in any one or more of claims 1 to 14.

## Patentansprüche

1. Verfahren für drahtlose Kommunikation, aufweisend:
Empfangen, durch einen ersten Zugangsknoten, einer Anfragenachricht von einem Kernnetzwerkknoten, aufweisend Informationen zum Aufbauen einer Multicast- und Broadcast-Dienst-, MBS-, Sitzung, wobei der erste Zugangsknoten ein Quellzugangsknoten oder ein Zielzugangsknoten in einem Handover-Prozess für eine drahtlose Vorrichtung von dem Quellzugangsknoten zu dem Zielzugangsknoten ist,
Aufbauen eines der MBS-Sitzung zugeordneten Puffers basierend auf einer Anforderung des Puffers, und
Übertragen einer Antwortnachricht an den Kernnetzwerkknoten als Reaktion auf die Anfragenachricht, wobei die Antwortnachricht Informationen über einen aufgebauten Puffer aufweist, und wobei der aufgebaute Puffer Kontinuität bei einem Empfang von MBS-Daten der MBS-Sitzung durch die drahtlose Vorrichtung während des Handover-Prozesses aufrechterhält.

2. Verfahren nach Anspruch 1, wobei die Anfragenachricht die Anforderung des der MBS-Sitzung zugeordneten Puffers einschließt.

3. Verfahren nach Anspruch 1 oder 2, wobei die Anfragenachricht mindestens eine Kennung der MBS-Sitzung oder eine Priorität der MBS-Sitzung aufweist.

4. Verfahren nach einem der Ansprüche 1 bis 3, wobei die Anforderung für den Puffer mindestens eines angibt von: (1) einer Beschränkung der Größe des Puffers, (2) einer Anzahl von in dem Puffer speicherbaren MBS-Datenpaketen, (3) einer dem Speichern von MBS-Datenpaketen zugeordneten Periodizität.

5. Verfahren nach einem der Ansprüche 1 bis 4, wobei die Informationen über den aufgebauten Puffer (1) eine Bestätigung, die einen Aufbau des Puffers angibt, oder (2) einen oder mehrere Parameter des aufgebauten Puffers einschließen.

6. Verfahren nach einem der Ansprüche 1 bis 5, wobei der erste Zugangsknoten eine zentralisierte Einheits-, CU-, Benutzerebenen-, UP-, Funktion, aufweist, und wobei der Kernnetzwerkknoten eine CU-Steuerebenen-, CP-, Funktion, aufweist.

7. Verfahren nach Anspruch 1, wobei der Quellzugangsknoten konfiguriert ist zum:
Übertragen einer ersten Nachricht an den Zielzugangsknoten, die Informationen angibt, die der MBS-Sitzung zugeordnet sind, wobei der Quellzugangsknoten konfiguriert ist, um einen ersten Satz von MBS-Datenpaketen, die von dem Kernnetzwerkknoten empfangen werden, in einem ersten Puffer zu speichern, wobei der Zielzugangsknoten konfiguriert ist, um einen zweiten Satz von MBS-Datenpaketen, die von dem Kernnetzwerkknoten empfangen werden, in einem zweiten Puffer zu speichern, und wobei die erste Nachricht Informationen eines letzten, durch den Quellzugangsknoten empfangenen und gespeicherten MBS-Datenpakets einschließt,
Empfangen einer zweiten Nachricht von dem Zielzugangsknoten, wobei die zweite Nachricht Informationen eines letzten, durch den Zielzugangsknoten empfangenen und gespeicherten MBS-Datenpakets einschließt, und
Weiterleiten von mindestens einem Teil des ersten Satzes von in dem ersten Puffer gespeicherten MBS-Datenpaketen an den Zielzugangsknoten.

8. Verfahren nach Anspruch 7, wobei jeder des ersten Satzes von MBS-Datenpaketen und des zweiten Satzes von MBS-Datenpaketen einer eindeutigen Sequenznummer zugeordnet ist, und wobei der Quellzugangsknoten ferner konfiguriert ist zum:
Neuordnen des ersten Satzes von MBS-Datenpaketen gemäß einer jeweiligen eindeutigen Sequenznummer, und
Übertragen des mindestens einen Teils des ersten Satzes von MBS-Datenpaketen basierend auf neu geordneten MBS-Datenpaketen.

9. Verfahren nach Anspruch 7 oder 8, wobei die erste Nachricht oder die zweite Nachricht ferner mindestens eine Kennung der MBS-Sitzung, Informationen über einen gemeinsam genutzten Tunnel, über den der Quellzugangsknoten den ersten Satz von MBS-Datenpaketen empfängt, Dienstgüteinformationen, die der MBS-Sitzung zugeordnet sind, aufweist.

10. Verfahren nach Anspruch 1, wobei der Zielzugangsknoten konfiguriert ist zum:
Empfangen einer ersten Nachricht von dem Quellzugangsknoten, die Informationen angibt, die der MBS-Sitzung zugeordnet sind, wobei der Quellzugangsknoten einen ersten Satz von MBS-Datenpaketen, die von dem Kernnetzwerkknoten empfangen werden, in einem ersten Puffer speichert, wobei der Zielzugangsknoten einen zweiten Satz von MBS-Datenpaketen, die von dem Kernnetzwerkknoten empfangen werden, in einem zweiten Puffer speichert, wobei jedes von dem ersten Satz von MBS-Datenpaketen und dem zweiten Satz von MBS-Datenpaketen einer eindeutigen Sequenznummer zugeordnet ist, und wobei die erste Nachricht Informationen eines letzten, durch den Quellzugangsknoten empfangenen und gespeicherten MBS-Datenpakets einschließt, und
Übertragen von mindestens einem Teil des ersten Satzes von MBS-Datenpaketen oder des zweiten Satzes von MBS-Datenpaketen an eine Benutzervorrichtung.

11. Verfahren nach Anspruch 10, wobei der Zielzugangsknoten ferner konfiguriert ist zum:
Übertragen einer zweiten Nachricht an den Quellzugangsknoten, wobei die zweite Nachricht Informationen eines letzten, durch den Zielzugangsknoten empfangenen und gespeicherten MBS-Datenpakets einschließt.

12. Verfahren nach Anspruch 10 oder 11, wobei der Zielzugangsknoten ferner konfiguriert ist zum:
Empfangen von mindestens einem Teil des ersten Satzes von MBS-Datenpaketen von dem ersten Zugangsknoten vor dem
Übertragen von MBS-Datenpaketen an die Benutzervorrichtung.

13. Verfahren nach einem der Ansprüche 10 bis 12, wobei der Zielzugangsknoten ferner konfiguriert ist zum:
Neuordnen des zweiten Satzes von MBS-Datenpaketen und der empfangenen MBS-Datenpakete gemäß einer jeweiligen eindeutigen Sequenznummer.

14. Verfahren nach Anspruch 13, wobei der Zielzugangsknoten ferner konfiguriert ist zum:
Übertragen einer zweiten Anfragenachricht an den Kernnetzwerkknoten nach dem Aufzeichnen der empfangenen MBS-Datenpakete, wobei die zweite Anfragenachricht Informationen eines letzten MBS-Datenpakets von neu geordneten MBS-Datenpaketen in dem zweiten Puffer einschließt, und
Empfangen einer zweiten Antwortnachricht von dem Kernnetzwerkknoten, die nachfolgende Übertragungen von MBS-Datenpaketen mit Sequenznummern, die größer als eine Sequenznummer des letzten MBS-Datenpakets sind, bestätigt.

15. Kommunikationseinrichtung (1305), aufweisend einen Prozessor (1310), der konfiguriert ist, um das Verfahren, das in einem oder mehreren der Ansprüche 1 bis 14 angegeben ist, zu implementieren.

## Revendications

1. Procédé pour des communications sans fil, comprenant :
la réception, par un premier nœud d'accès, d'un message de demande en provenance d'un nœud de réseau central comprenant des informations permettant d'établir une session de service de multidiffusion et de diffusion, MBS, dans lequel le premier nœud d'accès est un nœud d'accès source ou un nœud d'accès cible dans un processus de transfert pour un dispositif sans fil du nœud d'accès source au nœud d'accès cible,
l'établissement d'une mémoire tampon associée à la session MBS sur la base d'une exigence de la mémoire tampon, et
la transmission d'un message de réponse au nœud de réseau central en réponse au message de demande, dans lequel le message de réponse comprend des informations concernant une mémoire tampon établie, et dans lequel la mémoire tampon établie maintient une continuité dans une réception de données MBS de la session MBS par le dispositif sans fil pendant le processus de transfert.

2. Procédé selon la revendication 1, dans lequel le message de demande comporte l'exigence de la mémoire tampon associée à la session MBS.

3. Procédé selon la revendication 1 ou 2, dans lequel le message de demande comprend au moins un identifiant de la session MBS ou une priorité de la session MBS.

4. Procédé selon l'une quelconque des revendications 1 à 3, dans lequel l'exigence pour la mémoire tampon indique au moins l'un parmi : (1) une limitation de taille de la mémoire tampon, (2) un nombre de paquets de données MBS pouvant être stockés dans la mémoire tampon, (3) une périodicité associée à un stockage des paquets de données MBS.

5. Procédé selon l'une quelconque des revendications 1 à 4, dans lequel les informations concernant la mémoire tampon établie comportent (1) un accusé de réception indiquant un établissement de la mémoire tampon ou (2) un ou plusieurs paramètres de la mémoire tampon établie.

6. Procédé selon l'une quelconque des revendications 1 à 5, dans lequel le premier nœud d'accès comprend une fonction de plan utilisateur, UP, d'unité centralisée, CU, et dans lequel le nœud de réseau central comprend une fonction de plan de commande, CP, CU.

7. Procédé selon la revendication 1, dans lequel le nœud d'accès source est configuré pour :
transmettre un premier message au nœud d'accès cible indiquant des informations associées à la session MBS, dans lequel le nœud d'accès source est configuré pour stocker un premier ensemble de paquets de données MBS reçus en provenance du nœud de réseau central dans une première mémoire tampon, dans lequel le nœud d'accès cible est configuré pour stocker un second ensemble de paquets de données MBS reçus en provenance du nœud de réseau central dans une seconde mémoire tampon, et dans lequel le premier message comporte des informations d'un dernier paquet de données MBS reçu et stocké par le nœud d'accès source,
recevoir un second message en provenance du nœud d'accès cible, dans lequel le second message comporte des informations d'un dernier paquet de données MBS reçu et stocké par le nœud d'accès cible, et
transférer au moins une partie du premier ensemble de paquets de données MBS stocké dans la première mémoire tampon au nœud d'accès cible.

8. Procédé selon la revendication 7, dans lequel chacun du premier ensemble de paquets de données MBS et du second ensemble de paquets de données MBS est associé à un numéro de séquence unique, et dans lequel le nœud d'accès source est en outre configuré pour :
réorganiser le premier ensemble de paquets de données MBS selon un numéro de séquence unique respectif, et
transmettre l'au moins une partie du premier ensemble de paquets de données MBS sur la base de paquets de données MBS réorganisés.

9. Procédé selon la revendication 7 ou 8, dans lequel le premier message ou le second message comprend en outre au moins un identifiant de la session MBS, des informations concernant un tunnel partagé par l'intermédiaire duquel le nœud d'accès source reçoit le premier ensemble de paquets de données MBS, des informations de qualité de service associées à la session MBS.

10. Dispositif selon la revendication 1, dans lequel le nœud d'accès cible est configuré pour :
recevoir un premier message en provenance du nœud d'accès source indiquant des informations associées à la session MBS, dans lequel le nœud d'accès source stocke un premier ensemble de paquets de données MBS reçus en provenance du nœud de réseau central dans une première mémoire tampon, dans lequel le nœud d'accès cible stocke un second ensemble de paquets de données MBS reçus en provenance du nœud de réseau central dans une seconde mémoire tampon, dans lequel chacun du premier ensemble de paquets de données MBS et du second ensemble de paquets de données MBS est associé à un numéro de séquence unique, et dans lequel le premier message comporte des informations d'un dernier paquet de données MBS reçu et stocké par le nœud d'accès source, et
transmettre au moins une partie du premier ensemble de paquets de données MBS ou du second ensemble de paquets de données MBS à un dispositif utilisateur.

11. Procédé selon la revendication 10, dans lequel le nœud d'accès cible est en outre configuré pour :
transmettre un second message au nœud d'accès source, dans lequel le second message comporte des informations d'un dernier paquet de données MBS reçu et stocké par le nœud d'accès cible.

12. Procédé selon la revendication 10 ou 11, dans lequel le nœud d'accès cible est en outre configuré pour :
recevoir au moins une partie du premier ensemble de paquets de données MBS en provenance du premier nœud d'accès préalablement
à une transmission de paquets de données MBS au dispositif utilisateur.

13. Procédé selon l'une quelconque des revendications 10 à 12, dans lequel le nœud d'accès cible est configuré en outre pour :
réorganiser le second ensemble de paquets de données MBS et des paquets de données MBS reçus selon un numéro de séquence unique respectif.

14. Procédé de la revendication 13, dans lequel le nœud d'accès cible est en outre configuré pour :
transmettre un second message de demande au nœud de réseau central après un enregistrement des paquets de données MBS reçus, dans lequel le second message de demande comporte des informations d'un dernier paquet de données MBS de paquets de données MBS réorganisés dans la seconde mémoire tampon, et
recevoir un second message de réponse en provenance du nœud de réseau central accusant réception de transmissions ultérieures de paquets de données MBS avec des numéros de séquence supérieurs à un numéro de séquence du dernier paquet de données MBS.

15. Appareil de communication (1305), comprenant un processeur (1310) configuré pour mettre en œuvre le procédé selon l'une quelconque des revendications 1 à 14.
